# FASCICULE DE BREVET EUROPEEN

(11) **EP 1 524 054 B1**
(45) Date de publication et mention de la délivrance du brevet: **18.02.2009**
(21) Numéro de dépôt: 04292453.0
(22) Date de dépôt: 15.10.2004
(51) Int. Cl.: B23B 31/02, B23B 31/16

(54) **Adapteur pour mors**
Spannbackenadapter
Adapter for clamping jaws

(30) Priorité: 17.10.2003 FR 0312137
(43) Date de publication de la demande: 20.04.2005
(73) Titulaire: Tobler SAS, 95380 Louvres (FR)
(72) Inventeur: Barbieux, Jacques, 95380 Louvres (FR)
(74) Mandataire: Hirsch & Associés

(56) Documents cités:
- CH-A- 339 081
- GB-A- 465 855
- US-A- 2 543 117
- US-A- 4 671 520

## Description

La présente invention concerne un mandrin de maintien d'une pièce à usiner et en particulier un adaptateur de forme destiné à équiper un mors.

L'usinage d'une pièce nécessite de positionner avec précision la pièce sur l'outillage afin que l'enlèvement de matière s'effectue aux endroits prévus, en particulier sans taille excessive à certains endroits. Par exemple le tournage nécessite de bien centrer la pièce sur l'axe du tour, et donc de disposer d'un mandrin dont les porte-mors présentent des écarts radiaux identiques.

En outre, les mors, qui doivent appliquer une pression de maintien suffisante, ne doivent toutefois pas exercer une force de pression susceptible de déformer la pièce à usiner, particulièrement sensible si elle est tubulaire, et qui, par élasticité, tendrait à reprendre sa forme d'origine après usinage.

Pour éviter de déformer une telle pièce tubulaire cylindrique lors du serrage des mors, il est connu de l'enfiler préalablement dans une bague ou collerette de protection.

Une telle solution présente plusieurs inconvénients.

Tout d'abord, elle nécessite une manoeuvre spécifique d'enfilage lors de chaque opération de montage et de démontage, donc entraîne une perte de temps.

En outre, la collerette doit présenter un diamètre interne correspondant au diamètre maximal du tronçon d'extrémité de saisie de la pièce à usiner, en bout d'une plage de tolérances de fabrication. Par essence, ce tronçon d'extrémité de saisie est brut de fabrication. De ce fait, un tronçon d'extrémité quelconque, de diamètre situé à l'intérieur de la plage de tolérance de fabrication, présente un jeu radial par rapport à la collerette. Il s'en suit que, pour assurer le maintien radial voulu de la pièce à usiner, les more écrasent ponctuellement la collerette jusqu'a l'amener au contact du tronçon d'extrémité. De ce fait, les secteurs non ainsi écrasés de la collerette ont tendance à s'écarter radialement par gaufrage, si bien qu'elle prend une forme circulaire ondulée et perd donc sa forme parfaitement circulaire, sensée être adaptée à celle du tronçon d'extrémité. La force de serrage n'est donc aucunement répartie sur le pourtour de celui-ci. En bref, la collerette devrait répondre à deux exigences contradictoires, c'est-à-dire être à la fois indéformable, pour protéger la pièce, et déformable pour assurer un contact de maintien avec celle-ci. La collerette n'a donc qu'un effet très limité pour empêcher la déformation de la pièce à usiner.

US 2 543 117 enseigne un mandrin à trois mors principaux disposant chacun de deux positions de montage, radialement espacées pour s'adapter au diamètre de la pièce à usiner. Les mors principaux reçoivent chacun un adaptateur comportant des dents pour engrener avec celles d'un engrenage à usiner. Une vis fixe l'adaptateur par traversée d'une lumière à extension tangentielle, permettant ainsi à l'adaptateur, lors du serrage radial des mors, de se déplacer en direction circonférentielle pour se mettre "en phase" avec les dents de l'engrenage, la vis de fixation étant ensuite serrée.

US 4 671 520, représentant la base du préambule des revendications 1 et 10, enseigne une bague, de diamètre ajusté à celui de l'engrenage à usiner, que l'on boulonne au mandrin, cette bague portant, dans les trois secteurs des mors, trois fenêtrés tournées vers l'axe général et munies de fils axiaux radialement élastiques portant des galets, écrasés radialement vers l'axe par le mors associé, et destinés à ainsi servir d'adaptateurs entre le mors et l'engrenage à usiner.

La présente invention vise proposer une solution pour éliminer au moins l'un des deux inconvénients indiqués ci-dessus.

À cet effet, l'invention concerne d'abord un adaptateur de forme selon la revendication 1.

L'adaptateur constitue une sorte de mordache de forme déjà adaptée à la pièce, c'est-à-dire une mordache qui vient au contact de tout un secteur de la pièce et qui n'est pas nécessairement en matériau mou puisque sa forme est adaptée. Comme les mors porteurs sont mutuellement indépendants, c'est-à-dire avec des adaptateurs non mutuellement couplés, leurs serrages respectifs de la pièce à usiner ne peuvent pas provoquer les ondulations parasites évoquées pour la collerette de l'art antérieur. De ce fait, l'adaptateur conserve sa forme et, restant ainsi pleinement au contact de la pièce à usiner, il y exerce donc les forces de maintien réparties, ce qui évite ainsi un écrasement ponctuel.

On notera que les forces de maintien appliquées par un tel adaptateur peuvent être exercées sur une plage continue du secteur considéré ou sur une rangée de plages élémentaires s'étendant selon ce secteur, c'est pourquoi la surface de maintien n'a pas nécessairement exactement la forme du pourtour de la pièce à usiner.

Bien que l'invention soit particulièrement intéressante pour les pièces creuses, elle est aussi applicable à toute pièce pleine déformable.

Il convient de remarquer que, comme les adaptateurs sont mutuellement séparés, une même forme d'adaptateurs peut convenir pour diverses pièces de dimensions différentes, dans la mesure où leurs contours respectifs présentent des secteurs de saisie identiques. Par exemple, des contours rectangulaires permettent une saisie par les quatre zones d'angle, avec donc des adaptateurs, mutuellement écartés angulairement comme il convient, ayant une surface de maintien présentant deux plages à angle droit. Des contours carrés permettent en outre une saisie par les zones centrales des côtés, avec des mors, à écartement mutuel fixe de 90 degrés, ayant une surface de maintien plane.

Comme évoqué pour les cas particuliers ci-dessus, la surface de maintien peut avoir toute forme voulue, par exemple être plane, angulaire, ou courbe, avec ou sans reliefs de blocage en rotation de la pièce à usiner.

Les moyens de fixation peuvent être agencés pour un montage amovible de l'adaptateur.

L'utilisateur peut ainsi disposer d'un jeu d'adaptateurs pour divers contours.

Toutefois, dans le cas de pièces à usiner en série, les moyens de fixation sont de préférence agencés pour un montage à demeure, en fonctionnement, de l'adaptateur, afin de faciliter les opérations de montage et démontage du mors sur un porte-mors. L'ensemble constitué par le mors et l'adaptateur est ainsi manipulé d'un seul bloc.

Les galets sont montés mobiles sur des axes supports respectifs, afin de s'adapter au mieux à la forme de la denture. Si le montage mobile permet la rotation des galets au cours du temps, ceux-ci auront alors une grande section transversale circulaire, pour conserver l'adaptation de forme voulue.

Chaque axe support peut porter plusieurs galets, afin que la pièce à usiner soit maintenue sur une longueur axiale accrue.

Les axes supports peuvent être inclinés par rapport à une direction prévue d'axe général du mandrin, pour s'adapter au pas de vis d'un engrenage à usiner.

De façon avantageuse, les axes supports sont montés élastiquement, sur le mors ou le porte-galets, pour que, dans une position fonctionnelle, de serrage de la pièce à usiner, les galets soient radialement repoussée par la pièce à usiner contre une surface de contre-appui du mors ou du porte-galets, et pour que, dans une position desserrée, les galets soient rappelés à l'écart de la surface de contre-appui. Le montage élastique peut être réalisé de diverses façons, par exemple en montant les axes supports sur une couche tampon de matériau élastique ou sur un ressort.

En l'absence de pièce à usiner ou en position desserrée, l'utilisateur peut ainsi accéder facilement à la surface de contre-appui, destinée à être tournée vers l'axe du mandrin, pour enlever les copeaux coincés.

Chaque axe support est de préférence fixé au porte-galets par un tronçon d'extrémité de fixation élastiquement flexible, comportant éventuellement en outre un sous-tronçon de réception de galet (s), En bref, il peut par exemple s'agir d'une tige flexible élastiquement sur toute sa longueur.

En pareil cas, chaque axe support comporte de préférence un tronçon d'extrémité libre sensiblement plié à angle droit pour coulisser, lors de la flexion du tronçon de fixation, dans un passage de guidage ménagé dans le mors ou l'adaptateur.

Le porte-galets peut comporter un pion de synchronisation spatiale, occupant une position sectorielle prédéterminée par rapport aux galets, et présentant une extrémité libre axialement en avant des galets pour, lors de la misse en place de la pièce à engrenage dans le mandrin par avance axiale, engrener, préalablement aux galets, avec la denture de l'engrenage.

Les galets étant répartis selon le pas de la denture de l'emgrenage, le pion est donc positionné, par rapport à ceux-ci, à une distance correspondant à un nombre entier de pas. Il peut, en particulier, être monte dans la rangée, à la place d'un galet et en assurer aussi la fonction. La mise en prise des adaptateurs avec la denture de la pièce à usiner peut ainsi s'effectuer de façon automatique, sans risquer d'abîmer les galets, éventuellement en matériau plus mou que celui de la pièce pour mieux s'y adapter.

L'invention concerne aussi un mandrin selon la revendication 11.

Pour traiter le problème, évoqué ci-dessus, des copeaux coincés, le mandrin comporte de préférence des canaux de soufflage de fluide, liquide ou de préférence gazeux comme par exemple de l'air comprimé, vers la surface de maintien, les canaux étant avantageusement agencés, dans le cas d'une forme de réalisation avec galets, pour orienter des jets de soufflage du fluide vers des interstices entre les galets dans la rangée. On remarquera que les canaux de soufflage peuvent aussi être prévus sur un mandrin classique, c'est-à-dire exempt du présent adaptateur, dans la mesure où les mors classiques sont aussi susceptibles de coincer des micro-copeaux.

Pour un réglage de compensation radiale des erreurs de tolérance du mors, il peut être prévu que l'un, parmi le porte-mors et le mors associé, comporte une première face de coulage glissant présentant une première rainure, de guidage d'une clavette de réglage de distance radiale du mors, et l'autre comporte une seconde face opposée de couplage glissant, présentant une seconde rainure non parallèle à la première rainure et agencée pour recevoir un appendice latéral de la clavette, des moyens de manoeuvre étant associée à la clavette.

Comme le glissement dont être sensiblement radial, les deux faces de couplage opposées doivent être engendrées par des génératrices droites à orientation radiale, par exemple des plans ou encore des surfaces complémentaires à respectivement nervure et rainures radiales, assurant alors un blocage contre toute rotation parasite.

Selon le sens de déplacement de l'appendice latéral, celui-ci repousse le flanc radialement externe ou le flanc radialement interne de la seconde nervure, et fait ainsi glisser radialement le mors.

Cette caractéristique de réglage radial est particulièrement intéressante dans le cadre des adaptateurs de l'invention pour encore améliorer le centrage. Dans le cas d'un mandrin à plus de trois mors, elle permet en outre d'équilibrer les forces de maintien exercées par les divers mors, c'est-à-dire d'éviter toute déformation par contrainte de pression excessive dans l'un des secteurs. Cette caractéristique peut toutefois être aussi intégrée dans un mandrin classique pour en améliorer le centrage des mors.

Pour traiter les pièces à usiner de grand diamètre, l'ensemble, constitué par les porte-mors et les mors, est de préférence agencé pour ménager, dans une zone axiale de rayon limité prédéterminé, un espace frontal de réception d'un tronçon d'extrémité, de diamètre réduit, de la pièce à usiner.

Le centre de gravité de la pièce à usiner peut ainsi être avancé axialement au plus près du mandrin, limitant ainsi le porte-à-faux et donc l'amplitude des vibrations autour de l'axe général.

En particulier alors, les porte-mors peuvent comporter une première face, de couplage avec une seconde face opposée de couplage appartenant au mors, inclinée sur une radiale à l'axe général, dans un sens d'avance axiale en s'écartant de celui-ci.

Le mandrin présente ainsi une face avant sensiblement conique en creux. Là aussi, les diverses caractéristiques ci-dessus peuvent être prévues dans un mandrin classique.

L'invention sera mieux comprise à l'aide de la description suivante d'une forme de réalisation préférée et d'une variante d'un mandrin comportant des mors à adaptateur de forme selon l'invention, en référence au dessin annexé, sur lequel :
- la figure 1 est une vue de face des mors à adaptateur portés par un mandrin, selon l'invention,
- les figures 2A et 2B, constituant la figure 2, sont respectivement une vue de côté du mors de la figure 1 monté sur le mandrin et une vue développée de galets de l'adaptateur, et
- la figure 3 correspond, pour la variante, à la figure 2A.

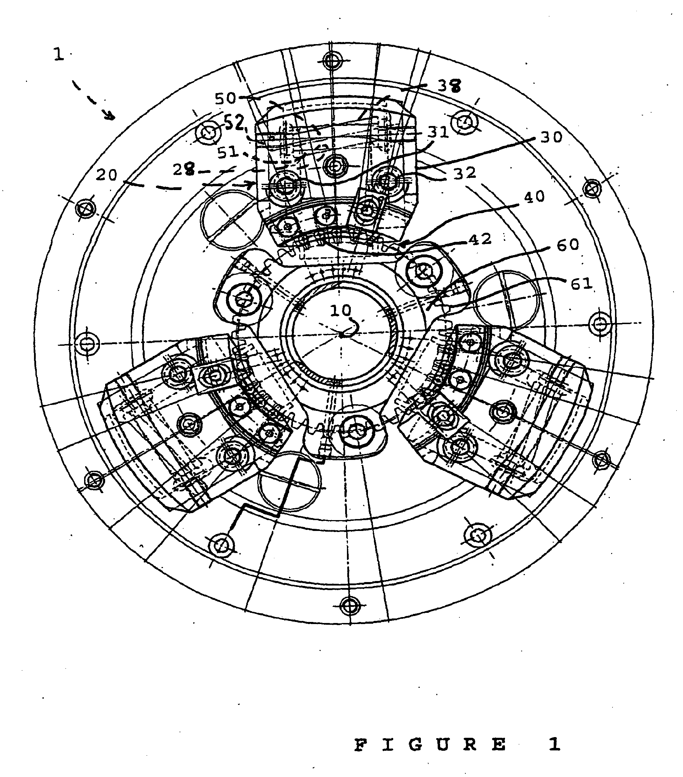

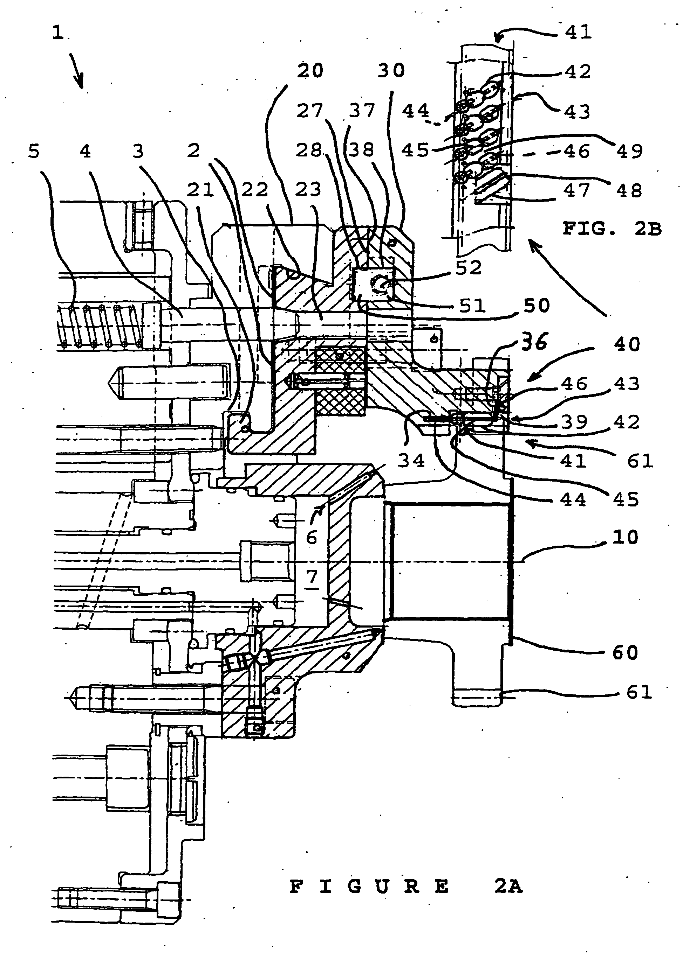

Les figures 1 et 2 représentent un mandrin 1 comprenant une pluralité de trois ensembles identiques, comportant chacun un porte-mors 20 équipé d'un mors 30 et équirépartis de façon circonférentielle autour d'un axe général 10.

La figure 2A montre que le porte-mors 20 représenté est plaqué contre une face avant 2 du corps du mandrin 1 et y est maintenu, à une extrémité radialement interne, par un croc radial 21 logé dans une cavité radiale 3 située derrière la face avant 2. Une extrémité opposée, radialement externe, présente un profil en queue d'aronde dont un flanc externe 22 est plaqué contre une paroi d'un logement correspondant dans le corps du mandrin 1, inclinée sur l'axe 10, et dont le flanc opposé est en fait un ajutage 23 sensiblement axial dans lequel une tige axiale de verrouillage 4 est repoussée par un ressort hélicoïdal 5 du mandrin 1, empêchant ainsi tout mouvement de libération radialement interne du porte-mors 20. Le porte-mors 20 comporte une face avant radiale 27 de réception et couplage, avec possibilité de glissement radial, d'une face opposée de couplage 37 du mors 30.

Comme le montre la figure 1, le mors 30 est fixé sur le porte-mors 20 par deux vis opposées 31, 32 à tête large, dont le tronçon le plus proche de la tête est logé librement dans un trou traversant du mors 30 présentant, dans cet exemple, une section transversale allongée radialement par rapport à l'axe 10, pour permettre, avant serrage des vis 31, 32, un glissement limité de réglage fin, ou équilibrage, de la distance radiale du mors 30, dans un but de centrage mutuel des trois mors 30, comme expliqué plus loin.

Le mors 30 est équipé d'éléments, ici des trous 34, de fixation d'un adaptateur de forme 40, présentant une surface 41, de maintien d'une pièce à usiner 60, de forme correspondant globalement à un secteur du pourtour de la pièce 60 pour y exercer une pluralité de forces de maintien réparties.

Précisément dans cet exemple, la pièce 60 présente une forme tubulaire cylindrique comportant une couronne de denture d'engrenage 61 servant à son maintien. La surface de maintien 41 forme à cet effet une mâchoire à denture globalement incurvée en creux, à extension circonférentielle par rapport à l'axe 10 et de même courbure que la denture 61, mais tournée vers l'axe 10 et couvrant un secteur angulaire déterminé. La rangée circonférentielle de dents de la mâchoire ci-dessus, constituant en fait la surface de maintien 41, peut ainsi engrener avec la denture 61.

Dans cet exemple, la denture de la surface de maintien 41 est constituée par des galets 42 ici montés mobiles sur des tiges d'axe support 43 respectives. Chaque axe support 43 est précisément ici une tige de section sensiblement circulaire permettant la rotation des galets 42, qui sont donc ici de section circulaire. Comme le montre la figure 2B, chaque axe support 43 porte plusieurs galets 42 dans cet exemple, de forme cylindrique ou sphérique. Les axes supports 43 sont inclinés par rapport à une direction prévue d'axe général 10 du mandrin, pour se conformer à l'orientation inclinée de la denture 61, dont les dents viennent se loger dans des interstices 49 séparant les galets 42 dans leur rangée.

Les galets 42 sont montés au-dessus d'une surface cylindrique de contre-appui 39 du mors 30, ou d'une embase de l'adaptateur 40, surface 39 qui est tournée vers l'axe 10 et sur laquelle les galets 42 reposent en fonctionnement pour exercer la pression voulue sur la pièce à usiner 60. Afin de faciliter le nettoyage des galets 42, par soufflage de micro-copeaux susceptibles de venir se coincer entre les divers galets 42 et la surface de contre-appui 39, les axes supports 43 sont montés élastiquement sur le mors 30, ou une embase du porte-galets 40, pour que, dans une position fonctionnelle, de serrage de la pièce à usiner 60, les galets 42 soient radialement repoussés par la pièce à usiner 60 contre la surface de contre-appui 39, et pour que, dans une position desserrée, les galets 42 soient rappelés à l'écart de la surface d'appui 39, c'est-à-dire vers l'axe 10.

A cet effet, chaque axe support 43 est fixé au porte-galets 40 (fig. 2A) par un tronçon d'extrémité de fixation élastiquement flexible 44, ici serti en extrémité dans l'un des trous 34, de section ajustée à celle de l'axe support 43. Le tronçon de fixation élastiquement flexible 44 comporte en outre un sous-tronçon 45 de réception des galets 42, c'est-à-dire que l'axe support 43 présente ici une élasticité sur toute sa longueur.

Chaque axe support 43 comporte un tronçon d'extrémité libre 46 sensiblement plié à angle droit pour coulisser, lors de la flexion du tronçon de fixation 44, 45, dans un passage de guidage 36 ménagé dans le mors 30, ou une embase appartenant à l'adaptateur 40.

En position desserrée, donc en l'absence de contrainte, les axes supports 43 occupent une position écartée de la surface de contre-appui 39, ce qui libère les micro-copeaux éventuellement présents et permet un soufflage efficace de ceux-ci.

Afin de faciliter, lors de la mise en place de la pièce à usiner 60, la mise en prise les galets 42 avec la denture 61, le porte-galets 40 comporte ici un pion de synchronisation spatiale 47, occupant une position sectorielle prédéterminée par rapport aux galets 42, et présentant une extrémité libre 48 axialement en avant des galets 42 pour, lors de la mise en place de la pièce à usiner 60 dans le mandrin par avance axiale, engrener, préalablement aux galets 42, avec la denture 61 de la pièce à usiner 60.

Comme évoqué plus haut, le porte-mors 20 et le mors 30 associé comportent respectivement la face de couplage glissant 27 coopérant avec la face opposée de couplage glissant 37. La face de couplage glissant 27 présente une première rainure 28, de guidage d'une clavette 50 de réglage de distance radiale du mors 30, et la face opposée de couplage glissant 37 présente une seconde rainure 38 non parallèle à la première rainure 28 (fig. 1) et agencée pour recevoir un appendice latéral 51 de la clavette 50, des éléments de manoeuvre 52 étant associés à la clavette 50. De ce fait, comme la seconde rainure 38 constitue une rampe par rapport à la première rainure 28, le coulissement de la clavette 50 dans la première rainure 28 applique l'appendice latéral 51 sur l'un ou l'autre des flancs de la seconde rainure 38, selon le sens de coulissement. Comme la première rainure 28 est à extension sensiblement tangentielle, c'est-à-dire circonférentielle, par rapport à l'axe 10, l'appendice latéral 51 exerce ainsi, sur le mors 30, une force radiale de montée ou descente. L'appendice 51 présente une largeur égale à celle de la seconde rainure 38 afin d'éviter tout effet d'hystérésis lors du réglage. Pour éviter une usure excessive, l'appendice 51 est réalisé sous la forme d'une clavette, c'est-à-dire que la clavette 50 est constituée d'un seul tenant par deux clavettes rectilignes accolées et présentant des directions d'extension mutuellement inclinées. On conçoit que l'explication ci-dessus resterait valable avec une approche duale, c'est-à-dire en considérant que c'est le mors 30 qui sert de référence pour déplacer le porte-mors 20 par rapport à lui-même.

Les éléments de manoeuvre 52 sont ici une tige amovible, éventuellement une vis, qui permet de pousser l'une ou l'autre des extrémités de la clavette 50 à travers deux passages étroits prolongeant la première rainure 28 à respectivement ses deux extrémités. En variante, il peut être prévu, à une seule de ces extrémités, une vis de réglage en va-et-vient dont l'extrémité interne, opposée à la tête de commande, comporte un relief radial de rappel, par exemple une boule, prisonnier axialement d'une cavité en extrémité de la clavette 50, c'est-à-dire bloqué en coulissement relatif, mais libre en rotation. Selon le sens du vissage, la clavette 50 est ainsi poussée ou tirée.

Pour assurer le soufflage ci-dessus des micro-copeaux, le mandrin 1 comporte une pluralité de canaux 6 de soufflage de fluide vers la surface de maintien 41 de l'adaptateur 40, par exemple de l'air comprimé, et plus précisément vers le dessous des galets 42, c'est-à-dire vers la surface de contre-appui 39. Précisément, les canaux 6, alimentés depuis une chambre axiale 107, sont répartis selon une surface conique à sommet tourné vers l'arrière du mandrin 1 et sont placés et dirigés pour orienter des jets de soufflage du fluide vers les interstices 49 séparant les galets 42 dans la rangée.

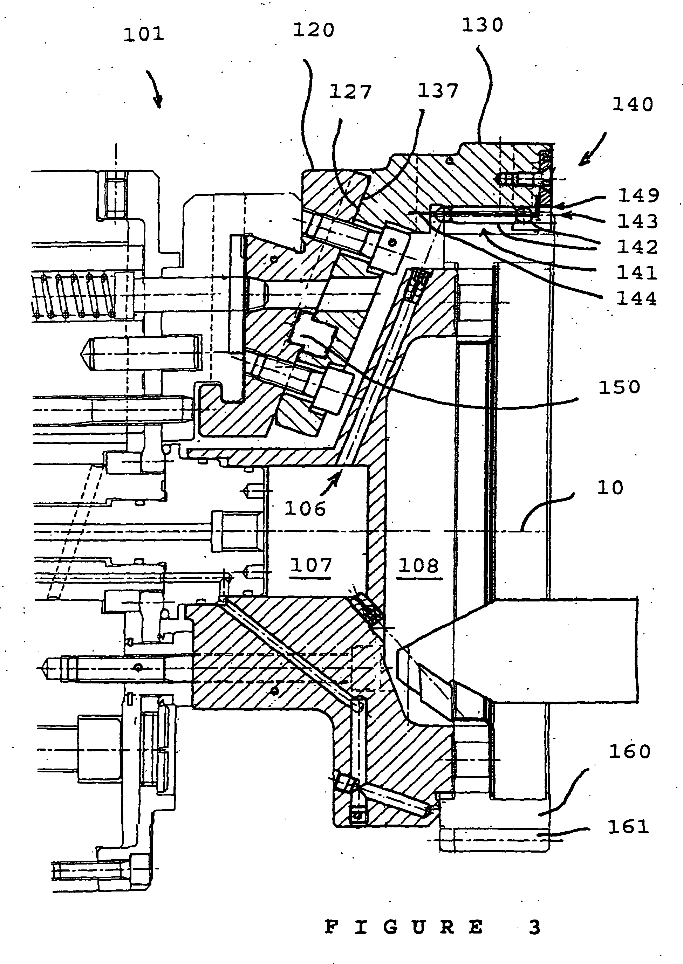

Sur la figure 3, représentant la variante de réalisation, les éléments homologues à ceux des figures 1 et 2 en portent la référence, toutefois précédée de la centaine 1.

Dans cette variante, l'ensemble constitué par les porte-mors 120 et les mors 130, portant les adaptateurs 140 à axes 143 porteurs des galets 142 de surface de maintien 141, est agencé pour ménager, dans une zone axiale de rayon limité prédéterminé, une cavité d'espace frontal 108 de réception d'un tronçon d'extrémité, de diamètre réduit, de la pièce à usiner 160. L'espace frontal 108 représente sensiblement l'espace conique limité par les canaux de soufflage 106.

L'adaptateur 140 comporte de même une surface de maintien 141 à galets 142 portés par des axes 143 à tronçon d'extrémité de fixation 144, séparés par des interstices 149.

En outre ici, les faces de couplage 127 et 137, couplées par la clavette 150, sont inclinées sur une radiale à l'axe général 10, dans un sens d'avance axiale en s'écartant de celui-ci, c'est-à-dire sensiblement parallèlement à la surface conique de répartition des canaux de soufflage 106 alimentés par la chambre 107. Cela permet ainsi de bien dégager axialement le fond de la cavité frontale 108.

## Revendications

1. Adaptateur de forme (40, 140), destiné à être monté dans un mandrin (1) muni de mors (30, 130), l'adaptateur comportant un porte-galets (40) comprenant une rangée de galets (42) montés mobiles sur des axes supports respectifs (43) et prévus pour engrener avec la denture d'un engrenage (61) de pourtour détermine appartenant à une pièce à usiner (60) pour y exercer une pluralité de forces de maintien reparties sur un secteur du dit pourtour, **caractérisé par le fait qu'**il comporte des moyens (34, 44) de fixation à l'un des mors (30, 130) et que la rangée de galets est de forme correspondant globalement à un secteur du dit pourtour.

2. Adaptateur selon la revendication 1, dans lequel chaque axe support (43) porte plusieurs galets (42).

3. Adaptateur selon la revendication 1 ou 2, dans lequel les axes supports (43) sont inclinés par rapport à une direction prévue d'axe général (10) du mandrin.

4. Adaptateur selon l'une des revendications 1 à 3, dans lequel les axes supports (43) sont montés élastiquement pour que, dans une position fonctionnelle, de serrage de la pièce à usiner (60), les galets (42) soient radialement repoussés par la pièce à usiner (60) contre une surface de contre-appui (39), et pour que, dans une position desserrée, les galets (42) soient rappelés à l'écart de la surface de contre-appui (39).

5. Adaptateur selon la revendication 4, dans lequel chaque axe support (43) est fixé au porte-galets (40) par un tronçon d'extrémité de fixation élastiquement flexible (44).

6. Adaptateur selon la revendication 5, dans lequel le tronçon de fixation élastiquement flexible (44) comporte en outre un sous-tronçon (45) de réception de galet(s) (42).

7. Adaptateur selon l'une des revendications 5 et 6, dans lequel chaque axe support (43) comporte un tronçon d'extrémité libre (46) sensiblement plié à angle droit pour coulisser, lors de la flexion du tronçon de fixation (44, 45) dams un passage de guidage (36).

8. Adaptateur selon l'une des revendications 1 à 7, comportant un pion de synchronisation spatiale (47), occupant une position sectorielle prédéterminée par rapport aux galets (42), et présentant une extrémité libre (48) axialement en avant des galets (42) pour, lors de la mise en place de la dite pièce (60) dans le mandrin par avance axiale, engrener, préalablement aux galets (42), avec les dents de l'engrenage (61).

9. Adaptateur selon l'une des revendications 1 à 8, dans lequel les moyens de fixation (44) sont agencée pour un montage à demeure, en fonctionnement, de l'adaptateurs (40).

10. Adaptateur selon l'une des revendications 1 à 8, dans lequel les moyens de fixation sont agencés pour un montage amovible de l'adaptateur (40).

11. Mandrin (1, 101) de maintien d'un engrenage à usiner (60, 160), de pourtour déterminée dans une position déterminée par rapport à un outil d'usinage, le mandrin comportant une pluralité de porte-mors (30, 130) et de mors correspondance (40, 140), répartis autour d'un axe général (10), **caractérisé par le fait que** les mors (40, 140) comportent des adaptateurs selon l'une des revendications 1 à 9 et des moyens de montage prévus pour coopérer avec les moyens de fixation (34, 44) appartenant aux adaptateurs respectifs.

12. Mandrin selon la revendication 11, comportant des canaux (6, 106) de soufflage de fluide vers la surface de maintien (141).

13. Mandrin selon la revendication 12, dans lequel les canaux de soufflage (6, 106) sont agencés pour orienter des jets de soufflage du fluide vers des interstices (49, 149) séparant les galets (42, 142) dans la rangée.

14. Mandrin selon l'une des revendications 11 à 13, dans lequel l'un quelconque, parmi le porte-mors (20, 120) et le mors (30, 130) associé, comporte une première face de couplage glissant (27, 127) présentant une première rainure (28), de guidage d'une clavette (50) de réglage de distance radiale du mors (30), et l'autre (30, 130 et 20, 120) comporte une seconde face opposée de couplage glissant (37, 137), présentant une seconde rainure (38) non parallèle à la première rainure (28) et agencée pour recevoir un appendice latéral (51) de la clavette (50, 150), des moyens de manoeuvre (52) étant associés à la clavette (50, 150).

15. Mandrin selon l'une des revendications 11 à 14, dans lequel l'ensemble constitué par les porte-mors (120) et les mors (130) est agencé pour ménager, dans une zone axiale de rayon limité prédéterminé, un espace frontal (107) de réception d'un tronçon d'extrémité, de diamètre réduit, de la pièce à usiner (160).

16. Mandrin selon la revendication 15, dans lequel les porte-mors (120) comportent une première face (127), de couplage avec une seconde face opposée (137) de couplage appartenant au mors (130), inclinée sur une radiale à l'axe général (10), dans un sens d'avance axiale en s'écartant de celui-ci.

## Claims

1. A shape adapter (40, 140), designed to be mounted in a chuck (1) having jaws (30, 130), the adapter including a roller carrier (40) comprising a row of rollers (42) movably mounted on respective carrier axes (43) and designed to mesh with the toothing of a gear (61) of determined contour belonging to a workpiece (60) in order to exercise thereon a plurality of holding forces distributed over a sector of said contour, **characterised by** the fact that it includes means (34, 44) providing securing to one of the jaws (30, 130) and in that the row of rollers is of a shape generally corresponding to a sector of said contour.

2. Adapter according to claim 1, in which each support axis (43) carries several rollers (42).

3. Adapter according to claim 1 or 2, in which the support axes (43) are inclined with respect to an intended direction of a general axis (10) of the chuck.

4. The adapter according to one of claims 1 to 3, in which the support axes (43) are resiliently mounted whereby, in an operating position, in which a workpiece (60) is clamped, the rollers (42) are urged back radially by the workpiece (60) against a counter-abutment surface (39), and whereby, in a released position, the rollers (42) are recalled so as to be distanced from the counter-abutment surface (39).

5. The adapter according to claim 4, in which each support axis (43) is secured to the roller carrier (40) by a resiliently flexible securing end portion (44).

6. The adapter according to claim 5, in which the resiliently flexible securing portion (44) further includes a subsection (45) for receiving the roller(s) (42).

7. The adapter according to one of claims 5 and 6, in which each support axis (43) includes a free end portion (46) which is bent substantially at a right angle in order to slide, when said securing portion (44, 45) flexes, in a guide passage (36).

8. The adapter according to one of claims 1 to 7, comprising a spatial synchronising pin (47) occupying a predetermined sectorial position with respect to said rollers (42), and having a free end (48) axially ahead of said rollers (42) in order to mesh, upon insertion of said workpiece (60) into the chuck by axial advancement, prior to the rollers (42), with the teeth of said gear (61).

9. The adapter according to one of claims 1 to 8, in which the securing means (44) are adapted for permanent mounting, during operation, of the adapter (40).

10. The adapter according to one of claims 1 to 8, in which the securing means are arranged for releasable mounting of the adapter (40).

11. A chuck (1, 101) for holding a gear that is to be machined (60, 160), of determined contour, in a determined position with respect to a machining tool, the chuck including a plurality of jaw carriers (30, 130) and corresponding jaws (40, 140), distributed around a general axis (10), **characterised by** the fact that the jaws (40, 140) include adapters according to one of claims 1 to 9 and mounting means provided for cooperating with the securing means (34, 44) belonging to the respective adapters.

12. The chuck according to claim 11, including channels (6, 106), for forced fluid blast in the direction of the holding surface (141).

13. The chuck according to claim 12, in which the forced blast channels (6, 106) are arranged so as to direct the fluid blast jets towards gaps (49, 149) separating individual rollers (42, 142) in the row.

14. The chuck according to one of claims 11 to 13, in which either one from among the jaw carrier (20, 120) and the jaw (30, 130) associated therewith, includes a first sliding coupling face (27, 127) having a first groove (28) for guiding a key (50) for radial distance adjustment of the jaw (30), and the other of which (30, 130 and 20, 120) includes a second sliding coupling face opposite thereto (37, 137), having a second groove (38) which is not parallel to the first groove (28) and arranged for receiving a side extension (51) of said key (50, 150), adjusting means (52) being associated with said key (50, 150).

15. The chuck according to any one of claims 11 to 14, in which the assembly constituted by the jaw carriers (120) and the jaws (130) is arranged to provide, within an axial region of predetermined limited radius, a forward space (107) for receiving an end portion, of reduced diameter, of the workpiece (160).

16. The chuck according to claim 15, in which the jaw carriers (120) include a first face (127), for coupling with a second coupling face opposite thereto (137) belonging to the jaw (130), inclined on a line radial to the general axis (10), in a direction of axial advancement moving away therefrom.

## Patentansprüche

1. Formadapter (40, 140), der dazu bestimmt ist, in einem Dorn (1), der mit Spannbacken (30, 130) versehen ist, montiert zu werden, wobei der Adapter einen Rollenträger (40) umfasst, der eine Rollenreihe aufweist, wobei die Rollen (42) auf jeweilige Stützachsen (43) beweglich montiert sind, und wobei die Rollenreihe dazu vorgesehen ist, in die Zahnung eines Radgetriebes (61) mit bestimmtem Umfang einzugreifen, der einem zu bearbeitenden Werkstück (60) angehört, um auf dieses eine Vielzahl von Haltekräften auszuüben, die auf einem Sektor des Umfangs verteilt sind, **dadurch gekennzeichnet, dass** er Mittel (34, 44) zur Befestigung an einer der Spannbacken (30, 130) umfasst, und dass die Rollenreihe eine Form aufweist, die global einem Sektor des Umfangs entspricht.

2. Adapter nach Anspruch 1, bei dem jede Stützachse (43) mehrere Rollen (42) trägt.

3. Adapter nach Anspruch 1 oder 2, bei dem die Stützachsen (43) in Bezug zu einer vorgesehenen Richtung der Generalachse (10) des Doms geneigt sind.

4. Adapter nach einem der Ansprüche 1 bis 3, bei dem die Stützachsen (43) elastisch montiert sind, damit in einer Funktionsposition des Einspannens des zu bearbeitenden Werkstücks (60) die Rollen (42) radial durch das zu bearbeitende Werkstück (60) an eine Gegenstützfläche (39) gedrückt werden, und damit in einer Freigabeposition die Rollen (42) wieder von der Gegenstützfläche (39) entfernt werden.

5. Adapter nach Anspruch 4, bei dem jede Stützachse (43) am Rollenträger (40) durch einen elastisch biegsamen Endbefestigungsabschnitt (44) befestigt ist.

6. Adapter nach Anspruch 5, bei dem der elastisch biegsame Befestigungsabschnitt (44) ferner einen Unterabschnitt (45) für die Aufnahme von Rolle(n) (42) umfasst.

7. Adapter nach einem der Ansprüche 5 und 6, bei dem jede Stützachse (43) einen freien Endabschnitt (46) aufweist, der im Wesentlichen im rechten Winkel gebogen ist, um bei der Biegung des Befestigungsabschnitts (44, 45) in einem Führungsweg (36) zu gleiten.

8. Adapter nach einem der Ansprüche 1 bis 7, umfassend einen Raumsynchronisierungsstift (47), der eine vorbestimmte Sektorposition in Bezug zu den Rollen (42) einnimmt und ein freies Ende (48) axial vor den Rollen (42) aufweist, um bei der Anbringung des Werkstücks (60) in dem Dorn durch axiales Vorschieben vor den Rollen (42) in die Zähne des Radgetriebes (61) einzugreifen.

9. Adapter nach einem der Ansprüche 1 bis 8, bei dem die Befestigungsmittel (44) für eine dauerhafte Montage des Adapters (40) während des Betriebs angeordnet sind.

10. Adapter nach einem der Ansprüche 1 bis 8, bei dem die Befestigungsmittel für eine abnehmbare Montage des Adapters (40) angeordnet sind.

11. Dorn (1, 101) zum Halten eines zu bearbeitenden Radgetriebes (60, 160) mit bestimmtem Umfang in einer bestimmten Position in Bezug zu einem Bearbeitungswerkzeug, wobei der Dorn einen Vielzahl von Spannbackenhaltern (30, 130) und von entsprechenden Spannbacken (40, 140), die um eine Generalachse (10) verteilt sind, umfasst, **dadurch gekennzeichnet, dass** die Spannbacken (40, 140) Adapter nach einem der Ansprüche 1 bis 9 und Montagemittel umfassen, wobei die Montagemittel dazu vorgesehen sind, mit den Befestigungsmitteln (34, 44) zusammenzuwirken, die den jeweiligen Adaptern angehören.

12. Dorn nach Anspruch 11, umfassend Kanäle (6, 106) zum Blasen eines Fluids zu der Haltefläche (141).

13. Dorn nach Anspruch 12, bei dem die Blaskanäle (6, 106) derart angeordnet sind, dass sie Fluidblasstrahlen zu Zwischenräumen (49, 149) zwischen den Rollen (42, 142) in der Reihe lenken.

14. Dorn nach einem der Ansprüche 11 bis 13, bei dem einer von den Spannbackenträgem (20, 120) und den zugehörigen Spannbacken (30, 130) eine erste Gleitkopplungsfläche (27, 127) umfasst, die eine erste Rille (28) zur Führung eines Keils (50) zur Regelung des Radialabstands der Spannbacke (30) aufweist, und der andere (30, 130 und 20, 120) eine zweite gegenüber liegende Gleitkopplungsfläche (37, 137) umfasst, die eine zweite Rille (38) aufweist, die zur ersten Rille (28) nicht parallel und derart angeordnet ist, dass sie einen seitlichen Fortsatz (51) des Keils (50, 150) aufnimmt, wobei Steuermittel (52) mit dem Keil (50, 150) verbunden sind.

15. Dorn nach einem der Ansprüche 11 bis 14, bei dem die Einheit, die von den Spannbackenträgern (120) und den Spannbacken (130) gebildet ist, derart angeordnet ist, dass in einer Axialzone mit vorbestimmtem begrenztem Radius ein vorderer Raum (107) zur Aufnahme eines Endabschnitts des zu bearbeitenden Werkstücks (160) mit geringerem Durchmesser ausgespart wird.

16. Dorn nach Anspruch 15, bei dem die Spannbackenträger (120) eine erste Seite (127) zur Kopplung mit einer zweiten gegenüber liegenden Kopplungsfläche (137), die der Spannbacke (130) angehört, umfassen, die auf einer Radialen zur Generalachse (10) in axiale Vorschubrichtung geneigt ist, wobei sie sich von dieser entfernt.
